# EUROPEAN PATENT SPECIFICATION

(11) **EP 3 076 449 B1**
(45) Date of publication and mention of the grant of the patent: **21.11.2018**
(21) Application number: 15765356.9
(22) Date of filing: 09.01.2015
(51) Int. Cl.: H01G 9/20

(54) **QUANTUM BATTERY**
QUANTENBATTERIE
BATTERIE QUANTIQUE

(30) Priority: 18.03.2014 JP 2014054978
(43) Date of publication of application: 05.10.2016
(73) Proprietor: Kabushiki Kaisha Nihon Micronics, Musashino-shi, Tokyo 180-8508 (JP); Guala Technology Co., Ltd., Chuo-ku Kobe-shi Hyogo 650-0047 (JP)
(72) Inventor: OGASAWARA, Juri, Musashino-shi, Tokyo 180-8508 (JP); HIWADA, Kiyoyasu, Musashino-shi, Tokyo 180-8508 (JP); NAKAZAWA, Akira, Kobe-shi, Hyogo 650-0047 (JP)
(74) Representative: Banse & Steglich Patentanwälte PartmbB
(86) International application number: PCT/JP2015/000077
(87) International publication number: WO 2015/141107

(56) References cited:
- WO-A1-2010/083055
- WO-A1-2013/065093
- WO-A1-2013/065093
- WO-A1-2013/154046
- WO-A1-2013/161926
- WO-A2-2011/162806
- JP-A- H07 283 076
- JP-A- 2001 291 637
- JP-A- 2003 142 627
- JP-A- 2004 207 681

## Description

### Technical Field

The present invention relates to a battery.

### Background Art

The applicant of the present application has developed a battery utilizing a photoexcited structural change of a metal oxide caused by ultraviolet irradiation (hereinafter referred to as "quantum battery") (Patent Literature 1 and 2). It is expected that the quantum battery technology disclosed in Patent Literature 1 and 2 can provide a battery capacity much larger than those of lithium-ion batteries. The secondary battery disclosed in Patent Literature 1 and 2 includes a first electrode, an n-type metal oxide semiconductor layer, a charging layer, a p-type semiconductor layer, and a second electrode stacked on a substrate.
Document WO2013/161926 A1 discloses a secondary battery also operating as a quantum battery and comprising a charging layer comprising insulation-coated n-type metal oxide semiconductor particles positioned between and in contact with a positive electrode layer comprising a p-type metal oxide semiconductor and a negative electrode layer. The battery may be configured as comprising a folded single-layer secondary cell formed by folding a sheet-shaped single-layer secondary cell, with a storage layer sandwiched between a positive electrode layer and a negative electrode layer, two or more times while alternately reversing the folding direction.
Document WO2013/154046 A1 discloses a similar quantum secondary battery, comprising two cell units each including a charging layer between a first electrode layer and a second electrode layer, the two cell units being parallel-connected by juxtaposing and connecting a first electrode layer of one cell unit and a first electrode layer of the other cell unit or a second electrode layer of the one cell unit and a second electrode layer of the other cell unit, and by wire-connecting the second electrode layer of the one cell unit and the second electrode layer of the other cell unit or the first electrode layer of the one cell unit and the first electrode layer of the other cell unit.
Document WO2010/083055 A1 discloses a solid-state energy storage device, comprising at least one quantum confinement species (QCS), at least one layer of a dielectric material, wherein said at least one QCS may have a spherical shape and incorporated with said at least one layer of a dielectric material; and a first conductive electrode disposed on a top surface of said at least one layer of said dielectric material and a second conductive electrode disposed on a bottom surface of said at least one layer of dielectric material, wherein said first electrode and said second electrode are disposed to transfer a charge to said at least one QCS, wherein when an electrical circuit is disposed to provide an electric potential across said first electrode and said second electrode, said electric potential discharges said transferred charge from said at least one QCS to said electrical circuit.

### Citation List

### Patent Literature

Patent Literature 1: International Patent Publication No. WO2012/046325
Patent Literature 2: International Patent Publication No. WO2013/065093

### Summary of Invention

### Technical Problem

This quantum battery has a parallel-plate structure in order to realize a thin-film battery. That is, a charging layer is disposed between first and second electrodes, so that the first and second electrodes are formed on the entire surface of the charging layer. As a result, it is very difficult to improve the volumetric efficiency and/or the capacity of this battery, and to reduce the weight thereof.

### Solution to Problem

The present invention concerns a battery according to claim 1, has been made in view of the above-described problems, and can provide an excellent battery.

A battery according to the present invention includes: a first electrode layer; a second electrode layer; and a charging element, wherein the charging element includes particles of an n-type metal oxide semiconductor covered with insulating material and being disposed between the first and second electrode layers, wherein a charging voltage is applied to the charging element, the charging element being configured to form an energy level in a band gap by causing a photoexcited structural change of the an n-type metal oxide semiconductor covered with the insulating material and thereby to capture an electron, wherein the first electrode layer includes a first metal electrode and a n-type metal oxide semiconductor layer disposed between the first metal electrode and the charging element, wherein the n-type metal oxide semiconductor layer is positioned in contact with the charging element, wherein the second electrode layer includes a second metal electrode and a p-type metal oxide semiconductor layer disposed between the second metal electrode and the charging element, wherein the p-type metal oxide semiconductor layer is positioned in contact with the charging element, wherein the charging element has a spherical shape, and wherein the first electrode layer and the second electrode layer are formed on a surface of the charging element, wherein a surface of at least one of the first and second electrode layers that is in contact with the charging element is a curved surface.

Another battery not forming part of the claimed invention may include: a first electrode layer; a second electrode layer; and a charging element to which a charging voltage between the first and second electrode layers is applied, the charging element being configured to form an energy level in a band gap by causing a photoexcited structural change of an n-type metal oxide semiconductor covered with an insulating substance and thereby to capture an electron, in which at least one of the first and second electrode layers is disposed inside the charging element.

In the above-described other battery, the charging element may be formed in a cylindrical shape. Further, the first electrode layer may be disposed inside the charging element and the second electrode layer may be disposed on an outer circumference surface of the charging element.

Another battery not forming part of the claimed invention may include: a first electrode layer; a second electrode layer; and a charging element to which a charging voltage between the first and second electrode layers is applied, the charging element being configured to form an energy level in a band gap by causing a photoexcited structural change of an n-type metal oxide semiconductor covered with an insulating substance and thereby to capture an electron, in which the charging element is formed in a three-dimensional shape.

Another battery may include: a first electrode layer; a second electrode layer; and a charging element to which a charging voltage between the first and second electrode layers is applied, the charging element being configured to form an energy level in a band gap by causing a photoexcited structural change of an n-type metal oxide semiconductor covered with an insulating substance and thereby to capture an electron, in which the second electrode layer is disposed on a surface of the charging element where the first electrode is disposed.

In the above-described other battery, a plurality of second electrode layers may be provided, and a second electrode layer that is opposed to the first electrode layer with the charging element interposed therebetween may be further provided.

Another battery may include: a first electrode layer; a second electrode layer; and a charging element to which a charging voltage between the first and second electrode layers is applied, the charging element being configured to form an energy level in a band gap by causing a photoexcited structural change of an n-type metal oxide semiconductor covered with an insulating substance and thereby to capture an electron, in which the second electrode layer is disposed in a place different from that of the first electrode layer in a plane view, the plane being along a surface of the charging element.

In the above-described other battery, the second electrode layer may be formed on a surface of the charging element where the first electrode layer is formed.

In the above-described other battery, the second electrode layer may be formed on an opposite surface to a surface of the charging element where the first electrode layer is formed.

Another battery may include: a first unit battery; and a second unit battery connected with the first unit battery in parallel or in series, in which the first unit battery is the above-described battery, and the second unit battery includes: a first electrode layer; a second electrode layer; and a charging element to which a charging voltage between the first and second electrode layers is applied, the charging element being configured to form an energy level in a band gap by causing a photoexcited structural change of an n-type metal oxide semiconductor covered with an insulating substance and thereby to capture an electron.

In the above-described battery according to an embodiment of the invention, the first unit battery may be the above-described battery and the second unit battery may be a parallel-plate type unit battery.

Another battery may be a battery in which each of the first and second unit batteries is the above-described battery and the first and second unit batteries are stacked.

### Advantageous Effects of Invention

According to the present invention, an excellent battery can be provided.

### Brief Description of Drawings

Fig. 1 is a perspective view showing a fundamental configuration of a quantum battery;
Fig. 2 is a cross section showing a fundamental configuration of a quantum battery;
Fig. 3 is a schematic plane view of a battery used in a verification experiment for an electron seepage phenomenon;
Fig. 4 is a figure for explaining an electron seepage phenomenon;
Fig. 5 is a figure for explaining an electron seepage phenomenon;
Fig. 6 is a figure for explaining an electron seepage phenomenon;
Fig. 7 is a figure for explaining an electron seepage phenomenon;
Fig. 8 is a perspective view showing a quantum battery according to Configuration Example 1;
Fig. 9 is a cross section showing the quantum battery according to Configuration Example 1;
Fig. 10 is a plane view showing the quantum battery according to Configuration Example 1;
Fig. 11 is a perspective view showing a quantum battery according to Configuration Example 2;
Fig. 12 is a cross section showing the quantum battery according to Configuration Example 2;
Fig. 13 is a plane view showing the quantum battery according to Configuration Example 2;
Fig. 14 is a perspective view showing a quantum battery according to Configuration Example 3;
Fig. 15 is a cross section showing the quantum battery according to Configuration Example 3;
Fig. 16 is a plane view showing the quantum battery according to Configuration Example 3;
Fig. 17 is a cross section showing a quantum battery according to Configuration Example 4;
Fig. 18 is a perspective view showing a quantum battery according to Configuration Example 5;
Fig. 19 is a perspective view showing a quantum battery according to Configuration Example 6;
Fig. 20 is a cross section showing Stacked Structure 1 of a quantum battery unit;
Fig. 21 is a cross section showing Stacked Structure 2 of a quantum battery unit;
Fig. 22 is a cross section showing Stacked Structure 3 of a quantum battery unit; and
Fig. 23 is a cross section showing Stacked Structure 4 of a quantum battery unit.

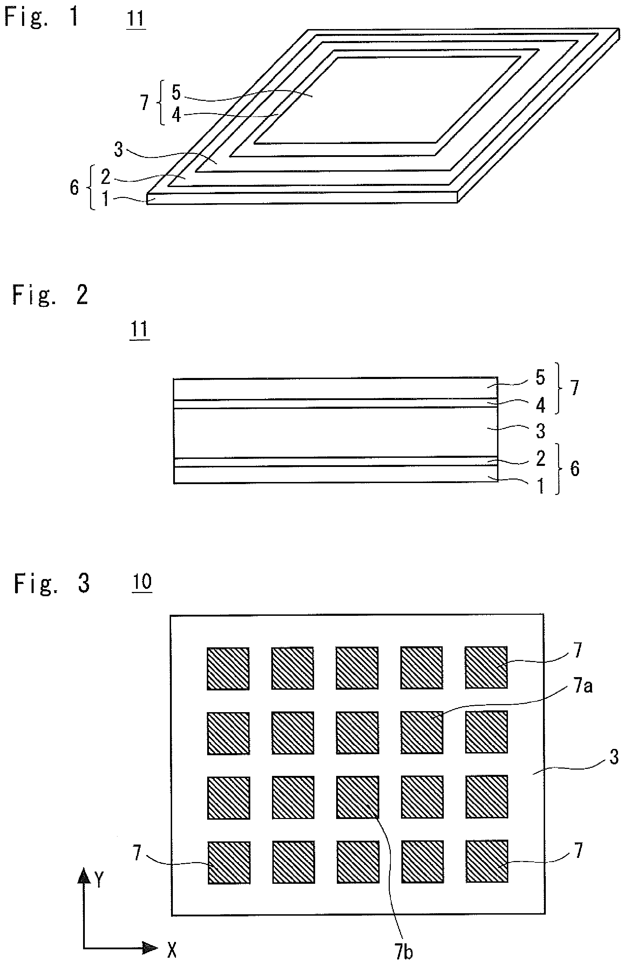

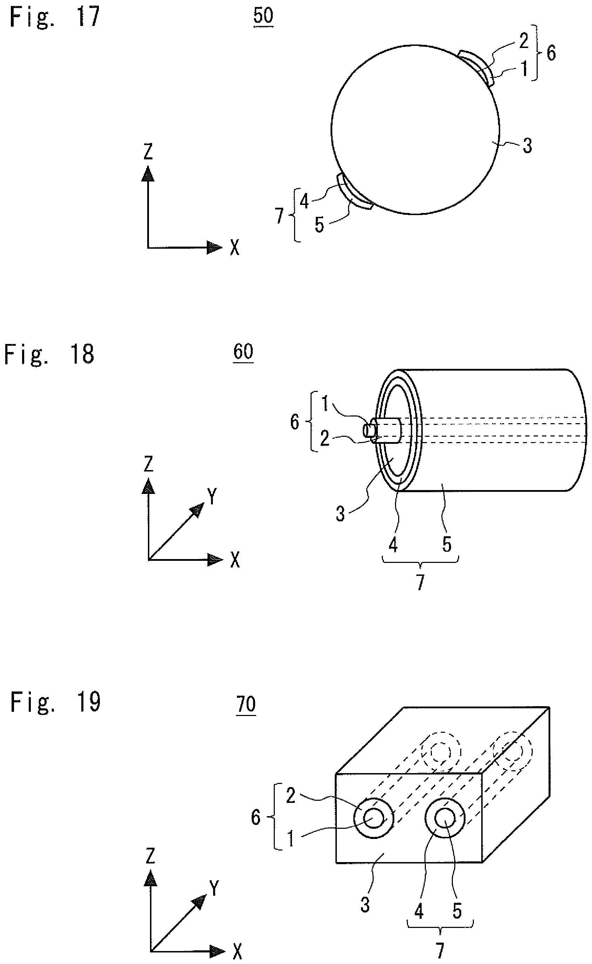

Figure 17 (Configuration Example 4) represents a battery according to the present invention. The other Figures 1-16 and 18-23 (Configuration Examples 1-3, 5, 6) are merely useful to understand the present invention as defined by the appended claims.

### Description of Embodiments

Exemplary embodiments are explained with reference to the drawings. Exemplary embodiments explained below are mere examples. Note that components/structures having the same symbols in the following specification and the drawings indicate mutually identical components/structures.

### (A) Regarding quantum battery

The battery according to each exemplary embodiment explained below is a battery to which the quantum battery technology is applied. Therefore, a quantum battery is briefly explained hereinafter before explaining each exemplary embodiment.

A quantum battery means a battery (secondary battery) that, in principle, forms an energy level in a band gap by utilizing a photoexcited structural change of a metal oxide and thereby captures electrons.

The quantum battery is an all-solid type battery and functions as a battery on its own. Figs. 1 and 2 show an example of a configuration of a quantum battery. Note that Fig. 1 is a perspective view showing a configuration of a parallel-plate structure type quantum battery 11, and Fig. 2 is a cross section thereof. Note that in Figs. 1 and 2, illustration of terminal members such as a positive terminal and a negative terminal as well as packaging elements such as an outer sheath element and a covering element are omitted.

The quantum battery 11 includes a charging element (charging layer) 3, a first electrode layer 6, and a second electrode layer 7. The charging element 3 is disposed between the first and second electrode layers 6 and 7. Therefore, a charging voltage generated across the first and second electrode layers 6 and 7 is applied to the charging element 3. The charging element 3 accumulates (captures) electrons in a charging operation and releases the accumulated electrons in a discharging operation. The charging element 3 is a layer that keeps electrons (accumulation of electricity) when charging is not performed. The charging element 3 is formed by applying a photoexcited structural change technique.

It should be noted that the photoexcited structural change is described, for example, in International Patent Publication No. WO2008/053561, and is a phenomenon (technique) discovered by Akira Nakazawa, who is the inventor of the aforementioned patent publication (and also the inventor of the present application). In particular, Nakazawa found out that when effective excitation energy is given to a metal oxide that is a semiconductor having a band gap of a predetermined value or larger and having transparency and is covered with insulating material, a lot of energy levels in which no electron is present are generated in the band gap. The quantum battery 11 is charged by capturing electrons in those energy levels and is discharged by releasing the captured electrons.

In the charging element 3, fine particles of an n-type metal oxide semiconductor covered with insulating material are deposited on the second electrode layer 7 in a thin-film state. Then, the n-type metal oxide semiconductor undergoes a change by causing a photoexcited structural change by ultraviolet irradiation so that it can accumulate electrons. The charging element 3 includes a plurality of fine particles of an n-type metal oxide semiconductor covered with insulating material.

The first electrode layer 6 is, for example, a negative electrode layer, and includes a first electrode 1 and an n-type metal oxide semiconductor layer 2. The n-type metal oxide semiconductor layer 2 is disposed between the first electrode 1 and the charging element 3. Therefore, one of the surfaces of the n-type metal oxide semiconductor layer 2 is in contact with the first electrode 1 and the other surface is in contact with the charging element 3.

In the charging element 3, the insulating coating that covers the fine particles of the n-type metal oxide semiconductor is not necessarily uniform coating. When the coating is not formed, the n-type metal oxide semiconductor in the charging element 3 is exposed. The n-type metal oxide semiconductor layer 2 functions as an insulating layer that insulates the n-type metal oxide semiconductor in the charging layer from the first electrode 1 and is provided to improve properties such as the charging capacity. Further, the n-type metal oxide semiconductor layer 2 provides an effective structure for reducing the characteristic variations of the finished element, thereby improving the stability and the yield in the manufacturing line.

The second electrode layer 7 is, for example, a positive electrode layer, and includes a second electrode 5 and a p-type metal oxide semiconductor layer 4. The p-type metal oxide semiconductor layer 4 is disposed between the second electrode 5 and the charging element 3. Therefore, one of the surfaces of the p-type metal oxide semiconductor layer 4 is in contact with the charging element 3 and the other surface is in contact with the second electrode 5. The p-type metal oxide semiconductor layer 4 is provided to prevent electrons from flowing from the second electrode 5 into the charging element 3.

Each of the first and second electrodes 1 and 5 needs to be formed of conductive material. Examples of metal electrodes that can be used for them include a silver (Ag) alloy film containing aluminum (Al). For the n-type metal oxide semiconductor layer 2, titanium dioxide (TiO2), tin oxide (SnO2), or zinc oxide (ZnO) may be used as its material. For the p-type metal oxide semiconductor layer 4, nickel oxide (NiO), copper aluminum oxide (CuAlO2), or the like can be used as its material.

Note that although the first electrode layer 6 has a two-layer structure composed of the first electrode 1 and the n-type metal oxide semiconductor layer 2 according to the above explanation, the structure of the first electrode layer 6 is not limited to the two-layer structure. For example, the first electrode layer 6 may be a single-layer structure composed of the first electrode 1 alone. Similarly, the structure of the second electrode layer 7 is not limited to the two-layer structure composed of the p-type metal oxide semiconductor layer 4 and the second electrode 5. For example, the second electrode layer 7 may be a single-layer structure composed of the second electrode 5 alone. That is, each of the first and second electrode layers 6 and 7 may be composed of a metal electrode alone.

### (B) Electron seepage phenomenon

It has been believed that in quantum batteries like the one shown in Figs. 1 and 2, electrons accumulate only in the charging element 3 disposed between the first and second electrode layers 6 and 7 during the charging. That is, it has been believed that electrons accumulate only in the area directly below the second electrode layer 7 in the charging element 3. However, experiments carried out by the inventors of the present application have shown a phenomenon that when the area directly below the second electrode layer 7 is fully filled with electrons, electrons seep out to the outside of the area directly below the second electrode layer 7. That is, it has been shown that electrons seep out to the outside of the area directly below the second electrode layer 7 and accumulate there.

The electron seepage phenomenon, which has been discovered by the inventors of the present application, is explained hereinafter. A quantum battery 10 like the one shown in Fig. 3 was used to discover the electron seepage phenomenon. Note that Fig. 3 is an XY-plane view schematically showing a pattern shape of a second electrode layer 7 disposed on a charging element 3.

In Fig. 3, a plurality of rectangular second electrode layers 7 are arranged in an array. That is, a plurality of rectangular second electrode layers 7 are arranged along the X-direction and the Y-direction. There are areas where no second electrode layer 7 is disposed between neighboring second electrode layers 7. Meanwhile, assume that a first electrode layer 6 (which is not shown in Fig. 3) is formed on substantially the entire surface of the charging element 3.

Here, a second electrode layer 7 to which a charging voltage is applied is referred to as "section 7a" hereinafter. That is, no charging voltage is applied to the sections other than the section 7a. Then, a voltage at each section when the section 7a is being charged and when the section 7a is in a natural discharging state was measured.

As the charging to the section 7a continues, the voltage in a section 7b located near the section 7a increases. That is, a voltage occurs in the section 7b, to which no charging voltage is applied, based on the electrons accumulated in the charging element 3. Further, even after the charging to the section 7a is stopped, the voltage in the section 7b rises while the voltage in the section 7a decreases due to the natural discharging. This experiment shows that electrons seep out from the charged place to the area around the charged place.

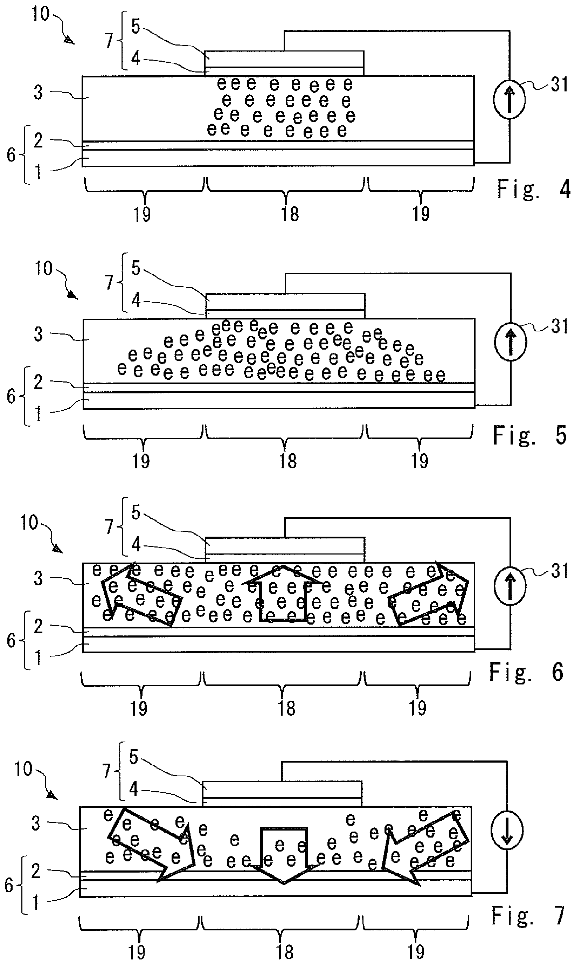

Figs. 4 to 7 show models for explaining the electron seepage phenomenon in the quantum battery 10. In Figs. 4 to 7, the first electrode layer 6 is formed on the entire surface of the charging element 3 and the second electrode layer 7 is formed in a part of the surface of the charging element 3. Note that the area where the second electrode layer 7 overlaps the first electrode layer 6 is referred to as "overlap area 18" and the area where they do not overlap is referred to as "non-overlap area 19".

Firstly, as shown in Fig. 4, a power supply 31 is connected across the first and second electrode layers 6 and 7 to generate a charging voltage in order to charge the quantum battery 10. The charging voltage between the first and second electrode layers 6 and 7 is applied to the charging element 3. During the charging of the quantum battery 10, electrons first start to accumulate in the area directly below the second electrode layer 7 (indicated by letters "e" in the figure). That is, electrons accumulate in the overlap area 18. Then, as shown in Fig. 5, when the overlap area 18 is fully filled with electrons, electrons start to accumulate in the outside of the area directly below the second electrode layer 7. That is, electrons diffuse from the overlap area 18 to the non-overlap area 19.

After that, as shown in Fig. 6, electrons diffuse throughout the charging element 3 until the potential is settled. That is, the density of electrons in the charging element 3 becomes uniform. As a result, the electron density in the overlap area 18 becomes substantially equal to that in the non-overlap area 19. During the discharging, as shown in Fig. 7, electrons located in the area directly below the second electrode layer 7 first escape, and then electrons located outside the area directly below the second electrode layer 7 gradually escape. That is, when the discharging starts, the electron density in the overlap area 18 becomes lower than that in the non-overlap area 19.

In the past, it has been believed that electrons accumulate only in the area directly below the second electrode layer 7. Therefore, parallel-plate structures in which both the first and second electrode layers 6 and 7 are formed on substantially the entire surface of the charging element 3 have been used. However, the electron seepage phenomenon enables an electrode layer(s) to be disposed on part of the surface of the charging element 3. Further, even when the electrode layer(s) is formed on part of the surface of the charging element 3, the same power capacity as that in the case where the electrode layer(s) is formed on the entire surface can be achieved, provided that the volume of the charging element 3 is the same as that in the above latter case. That is, when the quantum battery is charged to 100%, the electron density in the non-overlap area 19 becomes substantially equal to that in the overlap area 18. Therefore, it is possible to improve properties of the battery while maintaining its fundamental functions as a battery.

### (C) Single-layer quantum battery

As described above, quantum batteries having various configurations can be realized by the electron seepage phenomenon. Configuration Examples of quantum batteries are explained hereinafter. In the following explanation, a single quantum battery is explained.

### (C-1) Configuration Example 1 - Comparative Example

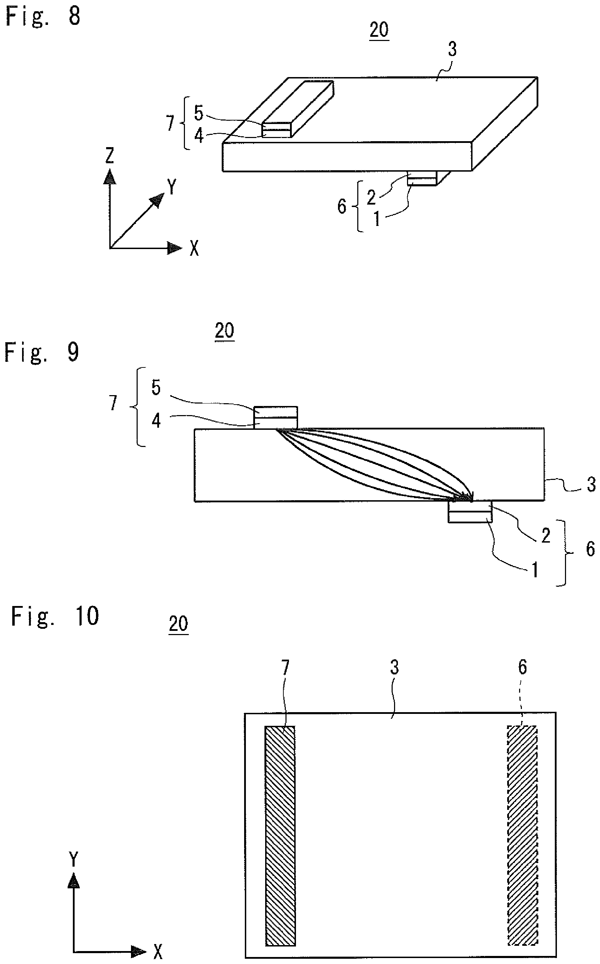

Fig. 8 is a perspective view showing a quantum battery 20 according to Configuration Example 1 and Fig. 9 is a cross section thereof. Further, Fig. 10 is a plane view of the quantum battery 20. In Configuration Example 1, the charging element 3 is a charging layer formed into a plate or a sheet. That is, two opposite surfaces of the charging element 3 are parallel planes. A first electrode layer 6 is formed on the bottom surface of the charging element 3 and a second electrode layer 7 is formed on the top surface thereof. That is, the first and second electrode layers 6 and 7 are formed on different surfaces of the charging element 3.

As shown in Fig. 10, the charging element 3 is formed in a rectangular shape in the XY-plane view. The positions of the first and second electrode layers 6 and 7 are shifted from each other in the XY-plane view. In this example, the first and second electrode layers 6 and 7 are formed in narrow rectangular shapes whose longitudinal direction is in the Y-direction. Further, the first electrode layer 6 is disposed on the positive end in the X-direction of the charging element 3 and the second electrode layer 7 is disposed on the negative end in the X-direction thereof. As described above, the first electrode layer 6 is disposed near one end of the charging element 3 in the X-direction and the second electrode layer 7 is disposed near the other end of the charging element 3 thereof.

When a charging voltage is applied across the first and second electrode layers 6 and 7, electric lines of force occur in the charging element 3 as shown in Fig. 9. Electrons accumulate in the charging element 3 by the charging voltage between the first and second electrode layers 6 and 7. Further, because of the above-described electron seepage phenomenon, electrons accumulate throughout the charging element 3. As described above, even when the positions of the first and second electrode layers 6 and 7 are shifted from each other in the X-direction, electrons accumulate throughout the charging element 3.

Since the first and second electrode layers 6 and 7 are formed only on parts of the charging element 3, the volumetric efficiency of the battery can be improved. In general, the volumetric efficiency of a battery is expressed by an expression "(Volumetric efficiency of battery) = (Effective volume of battery)/(Total volume of battery)". Therefore, the volumetric efficiency can be improved by reducing the total volume of the quantum battery 20. As shown above, since the electrode layers are reduced in size, the volumetric efficiency can be improved. Further, since the first and second electrode layers 6 and 7 are partially formed on the surface of the charging element 3, the weight of the quantum battery 20 can be reduced in comparison to the case where the first and second electrode layers 6 and 7 are formed on the entire surface of the charging element 3.

### (C-2) Configuration Example 2 - Comparative Example

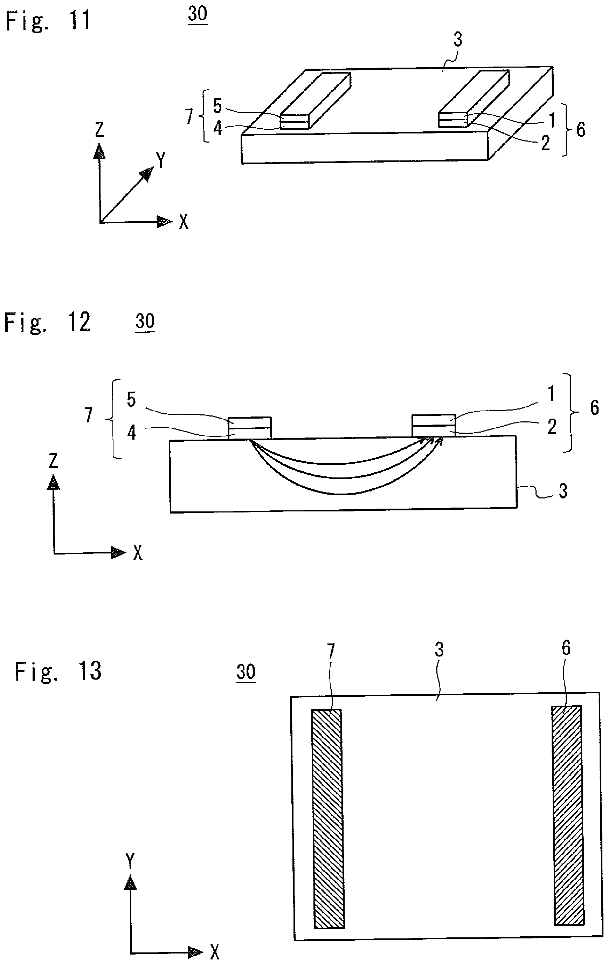

Fig. 11 is a perspective view showing a quantum battery 30 according to Configuration Example 2 and Fig. 12 is a cross section thereof. Further, Fig. 13 is a plane view of the quantum battery 30. In Configuration Example 2, the charging element 3 is a charging layer formed into a plate or a sheet. That is, two opposite surfaces of the charging element 3 are parallel planes. Configuration Example 2 is different from Configuration Example 1 in regard to the position of the first electrode layer 6. The first and second electrode layers 6 and 7 are both formed on the top surface of the charging element 3. The second electrode layer 7 is disposed on the surface of the charging element 3 where the first electrode layer 6 is disposed. The first and second electrode layers 6 and 7 are formed on the same plane of the charging element 3.

As shown in Fig. 13, the charging element 3 is formed in a rectangular shape in the XY-plane view. Further, the positions of the first and second electrode layers 6 and 7 are shifted from each other in the XY-plane view. In this example, the first and second electrode layers 6 and 7 are formed in narrow rectangular shapes whose longitudinal direction is in the Y-direction. Further, the first electrode layer 6 is disposed on the positive end in the X-direction of the charging element 3 and the second electrode layer 7 is disposed on the negative end in the X-direction. As described above, the first electrode layer 6 is disposed near one end of the charging element 3 and the second electrode layer 7 is disposed near the other end thereof in the XY-plane view. In the quantum battery 30, the second electrode layer 7 is disposed in a place different from that of the first electrode layer 6 in the XY-plane view.

When a charging voltage is applied across the first and second electrode layers 6 and 7, electric lines of force occur in the charging element 3 as shown in Fig. 12. As a result, electrons accumulate in the charging element 3 by the charging voltage between the first and second electrode layers 6 and 7. Further, because of the above-described electron seepage phenomenon, electrons accumulate throughout the charging element 3. As described above, even when the first and second electrode layers 6 and 7 are disposed on the same plane of the charging element 3 and are disposed in different positions in the X-direction, electrons accumulate throughout the charging element 3.

Since the first and second electrode layers 6 and 7 are formed only on a part(s) of the charging element 3, the volumetric efficiency of the battery can be improved. In general, the volumetric efficiency of a battery is expressed by an expression "(Volumetric efficiency of battery) = (Effective volume of battery)/(Total volume of battery)". Therefore, the volumetric efficiency can be improved by reducing the total volume of the quantum battery 30. As shown above, since the electrode layer is reduced in size, the volumetric efficiency can be improved. Further, since the first and second electrode layers 6 and 7 are partially formed in the charging element 3, the weight of the quantum battery 30 can be reduced in comparison to the case where the first and second electrode layers 6 and 7 are formed on the entire surface of the charging element 3.

### (C-3) Configuration Example 3 - Comparative Example

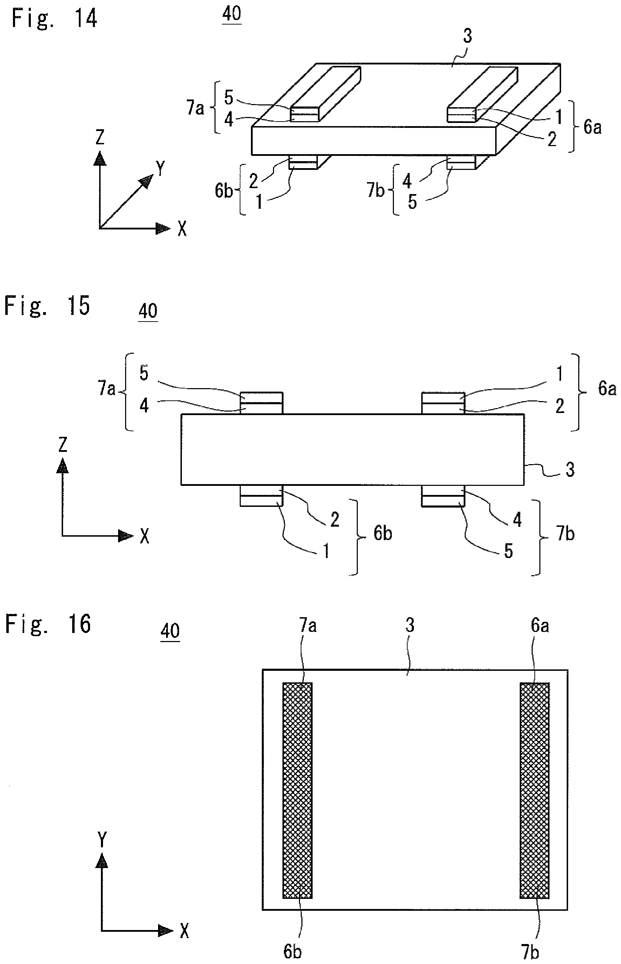

Fig. 14 is a perspective view showing a quantum battery 40 according to Configuration Example 3 and Fig. 15 is a cross section thereof. Further, Fig. 16 is a plane view of the quantum battery 40. In Configuration Example 3, the charging element 3 is a charging layer formed into a plate or a sheet. That is, two opposite surfaces of the charging element 3 are parallel planes. First and second electrode layers 6 and 7 are both formed on each of the top surface and the bottom surface of the charging element 3.

More specifically, the quantum battery 40 includes two first electrode layers 6 and two second electrode layers 7. In the following explanation, the two first electrode layers 6 are referred to as "first electrode layer 6a" and "first electrode layer 6b" respectively, and the two second electrode layers 7 are referred to as "second electrode layer 7a" and "second electrode layer 7b," respectively. The first electrode layer 6a and the second electrode layer 7a are formed on the top surface of the charging element 3. The first electrode layer 6b and the second electrode layer 7b are formed on the bottom surface of the charging element 3. The first electrode layer 6a is disposed on the positive end in the X-direction of the charging element 3 and the first electrode layer 6b is disposed on the negative end in the X-direction thereof.

The second electrode layer 7a is disposed on the negative end in the X-direction of the charging element 3 and the second electrode layer 7b, which is formed on the bottom surface of the charging element 3, is disposed on the positive end in the X-direction thereof. The second electrode layer 7a and the first electrode layer 6b are disposed so as to be opposed to each other with the charging element 3 interposed therebetween. That is, the position of the second electrode layer 7a coincides with that of the first electrode layer 6b on the XY-plane. The second electrode layer 7b and the first electrode layer 6a are disposed so as to be opposed to each other with the charging element 3 interposed therebetween. That is, the position of the second electrode layer 7b coincides with that of the first electrode layer 6a on the XY-plane.

Therefore, the second electrode layer 7 of the quantum battery 40 includes the second electrode layer 7a, which is disposed in a different position from that of the first electrode layer 6a in the XY-plane view, and the second electrode layer 7b, which is disposed in the same position as that of the first electrode layer 6a in the XY-plane view. Similarly, the first electrode layer 6 of the quantum battery 40 includes the first electrode layer 6b, which is disposed in the same position as that of the second electrode layer 7a in the XY-plane view, and the first electrode layer 6a, which is disposed in a different position from that of the second electrode layer 7a in the XY-plane view.

When a charging voltage is applied across the first and second electrode layers 6 and 7, electrons accumulate in the charging element 3 by the charging voltage between the first and second electrode layers 6 and 7. Further, because of the above-described electron seepage phenomenon, electrons accumulate throughout the charging element 3. As described above, even when the first and second electrode layers 6 and 7 are disposed on the same plane of the charging element 3 and in different positions in the X-direction, electrons accumulate throughout the charging element 3.

Further, in Configuration Example 3, each of the first and second electrode layers 6 and 7 is divided into and formed as a plurality of sections. Therefore, it is possible to use first and second electrode layers 6 and 7 in the charging process which are different from those used in the discharging process. For example, when the quantum battery is charged, a power supply is connected to all of the first electrode layers 6a and 6b and the second electrode layers 7a and 7b to apply a charging voltage to the battery. This enables a fast charging operation. Meanwhile, when the quantum battery is discharged, a load(s) or the like is connected only to the first electrode layer 6a and the second electrode layer 7b. In this way, it is possible to limit the electric power that is drawn out at once, thus enabling long-time discharging.

As described above, by forming a plurality of divided sections of electrode layers, it is possible to change the size of the overlap area between that in the charging process and that in the discharging process. For example, the size of the overlap area in the charging process can be reduced in comparison to that in the discharging process. Alternatively, the size of the overlap area in the charging process can be increased in comparison to that in the discharging process. Desired charging/discharging characteristics can be achieved by dividing the first electrode layer 6 or the second electrode layer 7 into a plurality of sections.

### (C-4) Configuration Example 4 - Example according to the claimed invention

Fig. 17 is a cross section showing a quantum battery 50 according to Configuration Example 4. The quantum battery 50 is formed in a three-dimensional shape in Configuration Example 4. Specifically, the quantum battery 50 includes a charging element 3 formed in a spherical shape. Further, first and second electrode layers 6 and 7 are formed on parts of the spherical charging element 3. The first and second electrode layers 6 and 7 are formed on part of the surface of the charging element 3.

The first and second electrode layers 6 and 7 are disposed so as to be opposed to each other with the charging element 3 interposed therebetween. In this example, the first and second electrode layers 6 and 7 are disposed to be opposed to each other so that the center of the spherical charging element 3 is positioned between the first and second electrode layers 6 and 7. In this case, when a charging voltage is applied across the first and second electrode layers 6 and 7, electrons accumulate in the charging element 3 by the charging voltage between the first and second electrode layers 6 and 7. Further, because of the above-described electron seepage phenomenon, electrons accumulate throughout the charging element 3. As described above, electrons spread throughout the spherical charging element 3.

The first and second electrode layers 6 and 7 are formed on the surface of the spherically-formed charging element 3. Therefore, the surface of the charging element 3 is formed in a spherical shape. For at least one of the first and second electrode layers 6 and 7, the surface that is in contact with the charging element 3 is a curved surface. Further, the exterior surface of the charging element 3 is a curved surface. The volumetric efficiency can be improved by forming the charging element 3 in a three-dimensional shape. Further, since the first and second electrode layers 6 and 7 are formed on part of the surface of the charging element 3, the weight of the quantum battery 50 can be reduced.

### (C-5) Configuration Example 5 - Comparative Example

Fig. 18 is a perspective view showing a quantum battery 60 according to Configuration Example 5. In Configuration Example 5, the quantum battery 60 has a coaxial configuration. Therefore, the charging element 3 is formed in a cylindrical shape. A cylindrical first electrode layer 6 is disposed at the center of the charging element 3. The outer circumference surface of the first electrode layer 6, which is located along the central axis, is in contact with the charging element 3. One end of the first electrode layer 6 is positioned outside the charging element 3 so that it can be connected to an external terminal.

A second electrode layer 7 is disposed on the outer circumference surface of the charging element 3. Therefore, the surface of the charging element 3 that is in contact with the first electrode layer 6 or the second electrode layer 7 is a curved surface. When a charging voltage is applied across the first and second electrode layers 6 and 7, electrons spread throughout the cylindrical charging element 3. Note that although the second electrode layer 7 is formed on the entire area of the outer circumference surface of the charging element 3 in Fig. 18, the second electrode layer 7 may be partially formed on the outer circumference surface. That is, the second electrode layer 7 may be formed on a part(s) of the outer circumference surface of the charging element 3. In this case, a plurality of sections of second electrode layers 7 can be formed on the outer circumference surface of the charging element 3.

Further, the first electrode layer 6 may have such a length in the X-direction that it extends only to some midpoint in the charging element 3. Needless to say, the positions of the first and second electrode layers 6 and 7 may be interchanged. That is, the first electrode layer 6 may be formed on the outer side of the charging element 3 and the second electrode layer 7 may be formed on the inner side of the charging element 3.

The charging element 3 is formed on the outer circumference surface of the cylindrical first electrode layer 6. Further, the second electrode layer 7 is formed on the outer circumference surface of the charging element 3. The surface of the charging element 3 is a curved surface. For at least one of the first and second electrode layers 6 and 7, the surface that is in contact with the charging element 3 is a curved surface. The volumetric efficiency can be improved by forming the charging element 3 in a three-dimensional shape. Further, since the first and second electrode layers 6 and 7 are formed on part of the charging element 3, the weight of the quantum battery 60 can be reduced.

### (C-6) Configuration Example 6 - Comparative Example

Fig. 19 is a perspective view showing a quantum battery 70 according to Configuration Example 6. In the quantum battery 70, the first and second electrode layers 6 and 7 are disposed inside the charging element 3. One end of each of the first and second electrode layers 6 and 7 is positioned outside the charging element 3 so that they can be connected to external terminals. In this example, each of the first and second electrode layers 6 and 7 is formed in a cylindrical shape whose longitudinal direction is in the Y-direction. The charging element 3 is formed in a rectangular parallelepiped shape with the first and second electrode layers 6 and 7 disposed inside thereof. Needless to say, the shapes of the first and second electrode layers 6 and 7 and the charging element 3 are not restricted to any particular shapes.

A part of the charging element 3 is disposed between the first and second electrode layers 6 and 7. When a charging voltage is supplied across the first and second electrode layers 6 and 7, a voltage is applied in the charging element 3. As the charging continues, electrons spread from the area between the first and second electrode layers 6 and 7 to the entire area of the charging element 3. Because of the above-described electron seepage phenomenon, electrons accumulate throughout the charging element 3.

Note that although the first and second electrode layers 6 and 7 are both disposed inside the charging element 3 in Fig. 19, only one of the first and second electrode layers 6 and 7 may be disposed inside the charging element 3. In this case, the other electrode layer may be formed on the surface of the charging element 3.

In Configuration Examples 1 to 3, the electrode layers are formed on part of the surface of the plate-like or sheet-like charging element 3. By using such configurations, various packaging configurations can be realized. As a result, it is possible to improve the volumetric efficiency of the quantum battery and/or to reduce the weight and/or the cost of the quantum battery.

In Configuration Examples 4 to 6, the charging element 3 is formed in a three-dimensional shape. The volume of the charging element 3 can be increased by forming the charging element 3 in a three-dimensional shape. That is, the battery capacity can be increased by using a charging element 3 having a large thickness. For example, when a plate-like or sheet-like charging layer is used, the area (i.e., two-dimensional size) of the charging layer needs to be increased to increase the volume of the charging layer. However, it could be difficult to increase the size of the charging layer in view of its uniformity. As explained above in this exemplary embodiment, it is possible to realize a quantum battery having a high battery capacity and excellent properties by using a three-dimensional charging element 3. Further, various packaging configurations can be realized by forming the charging element 3 in a three-dimensional shape. As a result, it is possible to improve the volumetric efficiency of the quantum battery and/or to reduce the weight and/or the cost of the quantum battery.

Various forming (or molding) methods can be used as a method for forming a charging element 3 in a three-dimensional shape. For example, a charging element 3 can be molded by using a mold having a desired shape. Specifically, fine particles of an n-type metal oxide semiconductor covered with insulating material are put into a mold. Then, after they are pressed and compacted, they are baked. By doing so, a charging element 3 having an arbitrary shape can be molded. It is possible to form a section(s) having a large thickness in the charging element 3 by using a mold having a desired shape, and thereby to form the charging element 3 in a three-dimensional shape. Further, in Configuration Examples 5 and 6, the charging element 3 is molded with an electrode layer(s) disposed inside thereof.

### (D) Stacked structure of quantum battery

In each of Configuration Examples 1-6, a single quantum battery is shown. However, it is possible to increase the capacity by combining a plurality of quantum batteries. A quantum battery including a plurality of single quantum batteries each of which may be one of the quantum batteries shown in Configuration Examples 1 to 6 is explained hereinafter. Hereinafter, a single quantum battery is also referred to as "unit quantum battery" and a quantum battery including a plurality of unit quantum batteries is also referred to as "quantum battery unit". It is possible to improve the volumetric efficiency of a quantum battery and/or to reduce the weight and/or the cost of a quantum battery even further by connecting a plurality of unit quantum batteries in parallel or in series.

### (D-1) Stacked Structure 1 of quantum battery unit

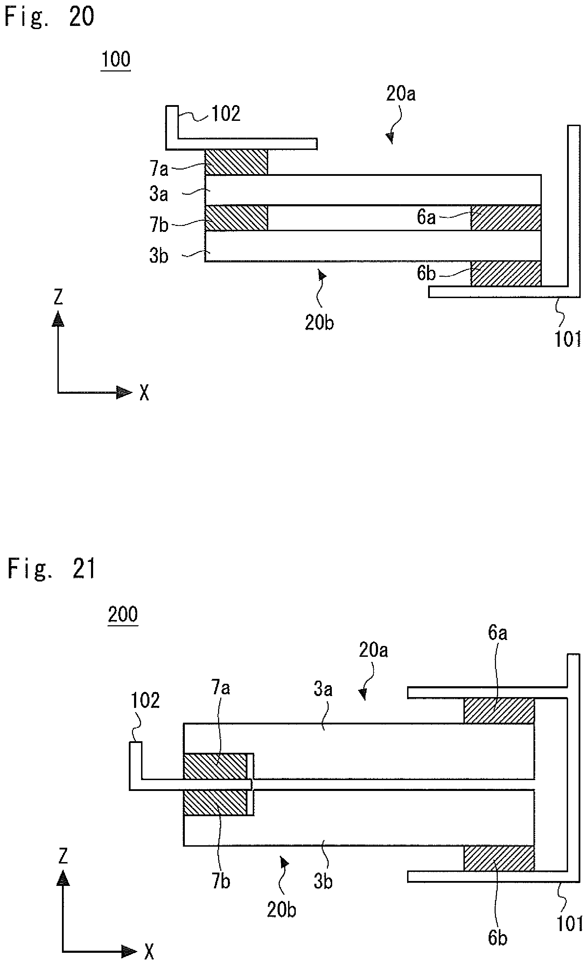

Fig. 20 is a cross section showing a quantum battery unit 100 according to Stacked Structure 1. In Fig. 20, two quantum batteries 20 each of which is shown in Configuration Example 1 are used. In Fig. 20, the quantum batteries 20 are referred to as unit quantum batteries 20a and 20b, respectively. The unit quantum batteries 20a and 20b are connected in series.

In Fig. 20, sheet-like or plate-like unit quantum batteries 20a and 20b are stacked on one another. That is, charging elements 3a and 3b are arranged in parallel with each other. Further, a first electrode layer 6a of the unit quantum battery 20a and a second electrode layer 7b of the unit quantum battery 20b are disposed between the charging elements 3a and 3b. A first electrode layer 6b is connected to a negative terminal 101 and a second electrode layer 7a is connected to a positive terminal 102. Further, the first electrode layer 6a is connected to the second electrode layer 7b. The first electrode layer 6a is connected to the second electrode layer 7b through, for example, a connection terminal(s) (not shown). Alternatively, the first electrode layer 6a may be connected to the second electrode layer 7b by forming a conductive pattern on the charging element 3a or 3b. Further, an insulating layer may be provided to prevent the first electrode layer 6a from coming into contact with the charging element 3b or the second electrode layer 7b from coming into contact with the charging element 3a.

As described above, the output voltage can be increased by connecting two unit quantum batteries 20a and 20b in series. Further, owing to the partial electrode configuration, the volumetric efficiency of the quantum battery unit 100 can be improved. Since the terminal structure can be simplified, the volumetric efficiency can be improved. Further, since the sizes of the first and second electrode layers 6 and 7 are small, the weight can be reduced.

Needless to say, a stacked structure composed of three layers or more may be adopted for the quantum battery unit 100. For example, such a stacked structure can be easily realized by disposing two or more structures each of which is shown in Fig. 20 in a repetitive fashion. The output voltage of the quantum battery unit 100 is expressed as "N×V" and the current capacity of the quantum battery unit 100 is expressed as "Ah", where V is the voltage of the unit quantum battery 20, Ah is the current capacity of the unit quantum battery 20 and N is the number of stacked layers.

### (D-2) Stacked Structure 2 of quantum battery unit

Fig. 21 is a cross section showing a quantum battery unit 200 according to Stacked Structure 2. In Fig. 21, two quantum batteries 20 each of which is shown in Configuration Example 1 are used. In Fig. 21, the quantum batteries 20 are referred to as unit quantum batteries 20a and 20b, respectively. The unit quantum batteries 20a and 20b are connected in parallel. In Fig. 21, sheet-like or plate-like unit quantum batteries 20a and 20b are stacked on one another. That is, charging elements 3a and 3b are arranged in parallel with each other.

Specifically, the unit quantum batteries 20a and 20b are arranged so that the second electrode layers 7a and 7b face each other. In other words, the second electrode layer 7a is disposed on the bottom surface of the charging element 3a and the second electrode layer 7b is disposed on the top surface of the charging element 3b. Further, a positive terminal 102 is disposed between the second electrode layers 7a and 7b. The positive terminal 102 is connected to the second electrode layers 7a and 7b in a state where the positive terminal 102 is sandwiched between the second electrode layers 7a and 7b. By using this configuration, the unit quantum batteries 20a and 20b can share the positive terminal 102, thus making it possible to simplify the terminal structure. Further, in Fig. 21, the quantum battery is formed so that the second electrode layer 7 does not protrude from the surface of the charging element 3.

Meanwhile, the first electrode layer 6a is disposed on the top surface of the charging element 3a and the first electrode layer 6b is disposed on the bottom surface of the charging element 3b. Further, a negative terminal 101 is connected to the first electrode layers 6a and 6b. The negative terminal 101 branches off so as to connect to each of the first electrode layers 6a and 6b.

The current capacity can be increased by connecting two unit quantum batteries 20a and 20b in parallel as shown above. Further, owing to the partial electrode configuration, the volumetric efficiency of the quantum battery unit 200 can be improved. Since the terminal structure can be simplified, the volumetric efficiency can be improved. Further, since the sizes of the first and second electrode layers 6 and 7 are small, the weight can be reduced.

Needless to say, a stacked structure composed of three layers or more may be adopted for the quantum battery unit 200. In this case, such a stacked structure can be easily realized, for example, by disposing two or more structures each of which is shown in Fig. 21 in a repetitive fashion. The current capacity of the quantum battery unit 200 is expressed as "N×Ah" and the output voltage of the quantum battery unit 200 is expressed as "V", where V is the output voltage of the unit quantum battery 20, Ah is the current capacity of the unit quantum battery 20 and N is the number of stacked layers.

Note that although the unit quantum batteries 20 are stacked in the quantum battery units according to Stacked Structures 1 and 2, unit quantum batteries having other configurations may be stacked in other quantum battery units. For example, unit quantum batteries 30 or unit quantum batteries 40 may be stacked in other quantum battery units. Alternatively, unit quantum batteries 20, 30 and/or 40 having different configurations may be stacked in other quantum battery units. For example, a unit quantum battery 20 and a unit quantum battery 30 may be stacked, or a unit quantum battery 20 and a unit quantum battery 40 may be stacked. Alternatively, a unit quantum battery 30 and a unit quantum battery 40 may be stacked. Needless to say, three or more unit quantum batteries may be combined. In this case, the current capacity is expressed as "N×Ah".

Further, it is possible to combine two or more parallel-connected unit quantum batteries with two or more series-connected unit quantum batteries. For example, it is possible to adopt a configuration including 2N unit quantum batteries in which the number of parallel connections is N and the number of series connections is N. In this case, the output voltage of the unit quantum battery is expressed as "N×V" and the current capacity is expressed as "N×Ah", where V is the voltage of the unit quantum battery and Ah is the current capacity of the unit quantum battery.

### (D-3) Stacked Structure 3 of quantum battery unit

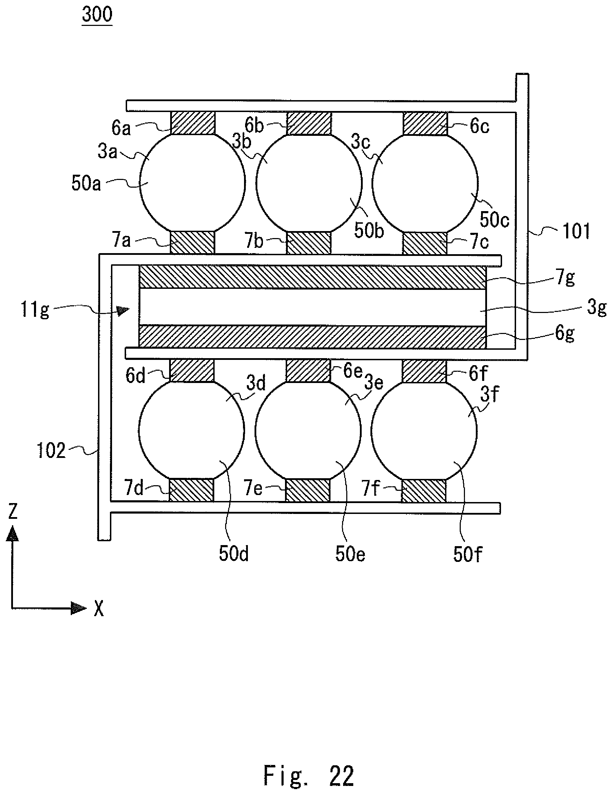

Fig. 22 is a cross section showing a quantum battery unit 300 according to Stacked Structure 3. In Fig. 22, the parallel-plate type quantum battery 11 shown in Figs. 1 and 2 is combined with the quantum battery 50 shown in Configuration Example 4. In Fig. 22, the quantum battery unit 300 includes one unit quantum battery 11 and six unit quantum batteries 50. That is, three-dimensional unit quantum batteries 50 are combined with a parallel-plate type unit quantum battery 11.

More specifically, three unit quantum batteries 50 are disposed on each surface of a quantum battery 11. The quantum battery unit 300 includes one unit quantum battery 11 and six unit quantum batteries 50. In Fig. 22, the unit quantum batteries 50 and the unit quantum battery 11 included in the quantum battery unit 300 are referred to as unit quantum batteries 50a to 50f and a unit quantum battery 11g, respectively.

The three-dimensional unit quantum batteries 50a to 50f are disposed on both sides of the sheet-like unit quantum battery 11g. That is, the parallel-plate type unit quantum battery 11 is disposed between the three-dimensional unit quantum batteries 50. The unit quantum batteries 50a to 50c are arranged in a row along the X-direction. The unit quantum batteries 50d to 50f are also arranged in a row along the X-direction.

The unit quantum batteries 50a, 50b and 50c are disposed above the (on +Z side) of the unit quantum battery 11g, and the unit quantum batteries 50d, 50e and 50f are disposed below the (on -Z side) of the unit quantum battery 11g. The unit quantum battery 11g and the unit quantum batteries 50a to 50f are connected in parallel. Therefore, the positive terminal 102 is connected to each of the second electrode layers 7a to 7g and the negative terminal 101 is connected to each of the first electrode layers 6a to 6g.

A part of the positive terminal 102 is disposed above the second electrode layer 7g. Further, a part of the positive terminal 102 is also disposed below the second electrode layers 7a, 7b and 7c. Therefore, the positive terminal 102 is substantially disposed between the second electrode layer 7g and the second electrode layers 7a, 7b and 7c. By using this configuration, the common positive terminal 102 can be connected to the second electrode layers 7a, 7b and 7c and to the second electrode layer 7g. That is, the top surface of the plate-like positive terminal 102 is in contact with the second electrode layers 7a, 7b and 7c and its bottom surface is in contact with the second electrode layer 7g. With this configuration, the terminal structure can be simplified.

A part of the negative terminal 101 is disposed below the first electrode layer 6g. Further, a part of the negative terminal 101 is also disposed above the first electrode layers 6d, 6e and 6f. Therefore, the negative terminal 101 is substantially disposed between the first electrode layer 6g and the first electrode layers 6d, 6e and 6f. By using this configuration, the common negative terminal 101 can be connected to the first electrode layers 6d, 6e and 6f and to the first electrode layer 6g. That is, the bottom surface of the plate-like negative terminal 101 is in contact with the first electrode layers 6d, 6e and 6f and the top surface of negative terminal 101 is in contact with the first electrode layer 6g. With this configuration, the terminal structure can be simplified.

In the configuration shown in Fig. 22, since the parallel-plate type unit quantum battery 11 is used, the power density can be improved. In addition, since the unit quantum batteries 50 each including the charging element 3 having a large volume is used, the current capacity can be improved. A battery having a large current capacity and a high power density can be realized by connecting a sheet-like quantum battery(ies) with a three-dimensional quantum battery(ies). Therefore, the quantum battery unit 300 having excellent properties can be realized.

Note that although the configuration in which the unit quantum batteries 50 are arranged in a row on each surface of the unit quantum battery 11 is shown in Fig. 22, the unit quantum batteries 50 may be arranged in two or more rows. That is, the unit quantum batteries 50 may be arranged in a matrix. In this case, a plurality of unit quantum batteries 50 are arranged along the X-direction and along the Y-direction. Further, the unit quantum batteries 50 may be arranged on only one of the surfaces of the unit quantum battery 11. Further, it is also possible to use any one of the quantum batteries 20 to 40 shown in Configuration Examples 1, 2 and 3 as the parallel-plate type unit quantum battery 11.

### (D-4) Stacked Structure 4 of quantum battery unit

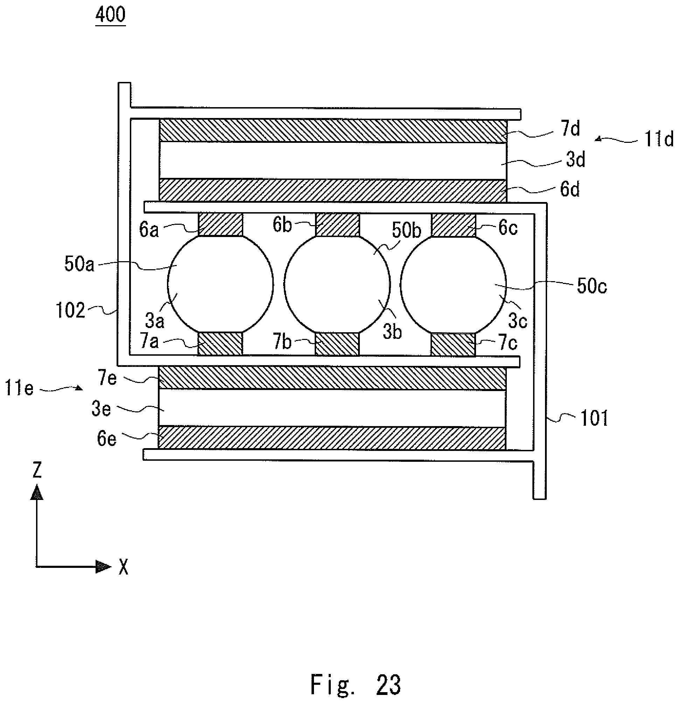

Fig. 23 is a cross section showing a quantum battery unit 400 according to Stacked Structure 4. In Fig. 23, the parallel-plate type quantum battery 11 shown in Fig. 1 is combined with the quantum battery 50 shown in Configuration Example 4. In Fig. 23, the quantum battery unit 400 includes two unit quantum batteries 11 and three unit quantum batteries 50.

More specifically, one unit quantum battery 11 is disposed above the quantum batteries 50 and the other unit quantum battery 11 is disposed below the quantum batteries 50. That is, the three-dimensional unit quantum batteries 50 are disposed between the parallel-plate type unit quantum batteries 11. In Fig. 23, the unit quantum batteries 50 and the unit quantum batteries 11 included in the quantum battery unit 400 are referred to as unit quantum batteries 50a to 50c and unit quantum batteries 11d and 11e, respectively.

The three-dimensional unit quantum batteries 50a to 50c are disposed between the sheet-like unit quantum batteries 11d and 11e. The unit quantum batteries 50a to 50c are arranged in a row along the X-direction. The unit quantum batteries lid and 11e and the unit quantum batteries 50a to 50c are connected in parallel. Therefore, the positive terminal 102 is connected to each of the second electrode layers 7a to 7e and the negative terminal 101 is connected to each of the first electrode layers 6a to 6e.

The second electrode layer 7d is disposed on the top surface of the unit quantum battery lid and the first electrode layer 6d is disposed on the bottom surface of this battery. The first electrode layers 6a to 6c are disposed on the top side of the unit quantum batteries 50a to 50c. Further, a part of the negative terminal 101 is disposed between the first electrode layers 6a to 6c and the first electrode layer 6d. By using this configuration, the common negative terminal 101 can be connected to the first electrode layers 6a, 6b and 6c and to the first electrode layer 6d. That is, the bottom surface of the plate-like negative terminal 101 is in contact with the first electrode layers 6a, 6b and 6c and its top surface is in contact with the first electrode layer 6d. With this configuration, the terminal structure can be simplified.

The second electrode layer 7e is disposed on the top surface of the unit quantum battery 11e and the first electrode layer 6e is disposed on the bottom surface of unit quantum battery 11e. The second electrode layers 7a to 7c are disposed on the bottom side of the unit quantum batteries 50a to 50c. Further, a part of the positive terminal 102 is disposed between the second electrode layers 7a to 7c and the second electrode layer 7e. By using this configuration, the common positive terminal 102 can be connected to the second electrode layers 7a to 7c and to the second electrode layer 7e. That is, the top surface of the plate-like positive terminal 102 is in contact with the second electrode layers 7a, 7b and 7c and its bottom surface is in contact with the second electrode layer 7d. With this configuration, the terminal structure can be simplified.

In the configuration shown in Fig. 23, since the parallel-plate type unit quantum batteries 11 are used, the power density can be improved. In addition, since the unit quantum batteries 50 each including the charging element 3 having a large volume is used, the current capacity can be improved. A battery having a large current capacity and a high power density can be realized by connecting a sheet-like quantum battery(ies) with a three-dimensional quantum battery(ies). Therefore, the quantum battery unit 400 having excellent properties can be realized.

Note that although the configuration in which the unit quantum batteries 50 are arranged in a row on the surfaces of the unit quantum batteries 11 is shown in Fig. 23, the unit quantum batteries 50 may be arranged in two or more rows. That is, the unit quantum batteries 50 may be arranged in a matrix. In this case, a plurality of unit quantum batteries 50 are arranged along the X-direction and along the Y-direction. With this configuration, the battery capacity can be improved.

As shown in Stacked Structures 3 and 4, a quantum battery unit is formed by combining a sheet-like unit quantum battery (ies) with a three-dimensional unit quantum battery (ies). That is, the electrode layer of a sheet-like unit quantum battery (ies) is connected to the electrode layer of a three-dimensional unit quantum battery (ies). By using this configuration, the properties of these batteries are made to complement each other. That is, in the case of a sheet-like unit quantum battery, since the area where the electrode layer is in contact with the charging element 3 can be increased, the power density (current density) can be increased. On the other hand, in the case of a three-dimensional unit quantum battery, since the volume of the charging element 3 is large, the battery capacity is large. Therefore, the properties of these batteries can be made to complement each other by connecting a sheet-like unit quantum battery(ies) with a three-dimensional unit quantum battery(ies). As a result, it is possible to realize an excellent quantum battery unit.

Although unit quantum batteries having different structures are connected in parallel in Stacked Structures 3 and 4, they can be connected in series. In this case, the second electrode layer 7 of a sheet-like unit quantum battery 11 may be connected to the first electrode layer 6 of a three-dimensional unit quantum battery 50. Alternatively, the first electrode layer 6 of a sheet-like unit quantum battery 11 may be connected to the second electrode layer 7 of a three-dimensional unit quantum battery 50.

Further, it is also possible to use any one of the quantum batteries 20 to 40 shown in Configuration Examples 1, 2 and 3 as the parallel-plate type unit quantum battery 11 in Stacked Structures 3 and 4. Although the above explanation is given on the assumption that the first electrode layer 6 is a negative electrode layer and the second electrode layer 7 is a positive electrode layer, the first electrode layer 6 may be a positive electrode layer and the second electrode layer 7 may be a negative electrode layer.

### Reference Signs List

- 1: FIRST ELECTRODE
- 2: n-TYPE METAL OXIDE SEMICONDUCTOR LAYER
- 3: CHARGING ELEMENT
- 4: p-TYPE METAL OXIDE SEMICONDUCTOR LAYER
- 5: SECOND ELECTRODE
- 6: FIRST ELECTRODE LAYER
- 7: SECOND ELECTRODE LAYER
- 10: QUANTUM BATTERY
- 18: OVERLAP AREA
- 19: NON-OVERLAP AREA

## Claims

1. A battery (50) comprising:
a first electrode layer (6);
a second electrode layer (7); and
a charging element (3) including particles of an n-type metal oxide semiconductor covered with insulating material and being disposed between the first and second electrode layers (6,7), wherein, when a charging voltage is applied between the first and second electrode layers (6, 7) to the charging element (3), the charging element (3) is configured to form an energy level in a band gap by causing a photoexcited structural change of the an n-type metal oxide semiconductor covered with the insulating material and thereby to capture an electron, **characterized in that** the first electrode layer (6) includes a first metal electrode (1) and a n-type metal oxide semiconductor layer (2) disposed between the first metal electrode (1) and the charging element (3), wherein the n-type metal oxide semiconductor layer (2) is positioned in contact with the charging element (3),
the second electrode layer (7) includes a second metal electrode (5) and a p-type metal oxide semiconductor layer (4) disposed between the second metal electrode (5) and the charging element (3), wherein the p-type metal oxide semiconductor layer (4) is positioned in contact with the charging element (3),
the charging element (3) has a spherical shape, and
the first electrode layer (6) and the second electrode layer (7) are formed on a surface of the charging element (3),
wherein a surface of at least one of the first and second electrode layers that is in contact with the charging element is a curved surface.

2. A battery comprising:
a first unit battery; and
a second unit battery connected with the first unit battery in parallel or in series, wherein
the first unit battery is a battery according to claim 1, and
the second unit battery comprises:
a first electrode layer;
a second electrode layer; and
a charging element to which a charging voltage between the first and second electrode layers is applied, the charging element being configured to form an energy level in a band gap by causing a photoexcited structural change of an n-type metal oxide semiconductor covered with an insulating substance and thereby to capture an electron.

3. The battery according to claim 2, wherein
the first unit battery is a battery according to claim 1, and
the second unit battery is a parallel-plate type unit battery.

## Patentansprüche

1. Batterie (50), umfassend:
eine erste Elektrodenschicht (6);
eine zweite Elektrodenschicht (7); und
ein Ladeelement (3), das Partikel eines n-Typ-Metalloxidhalbleiters umfasst, die mit einem isolierenden Material beschichtet sind und zwischen der ersten und zweiten Elektrodenschicht (6, 7) angeordnet sind, wobei das Ladeelement (3) ausgebildet ist, um, wenn eine Ladespannung zwischen der ersten und zweiten Elektrodenschicht (6, 7) an das Ladeelement (3) angelegt wird, ein Energieniveau in einer Bandlücke auszubilden, indem eine strukturelle Änderung des n-Typ-Metalloxidhalbleiters, der mit dem isolierenden Material beschichtet ist, durch Fotoanregung zu bewirken und dadurch ein Elektron einzufangen,
**dadurch gekennzeichnet, dass**
die erste Elektrodenschicht (6) eine erste Metallelektrode (1) und eine n-Typ-Metalloxidhalbleiterschicht (2), die zwischen der ersten Metallelektrode (1) und im Aufladeelement (3) angeordnet ist, umfasst, wobei die n-Typ-Metalloxidhalbleiterschicht (2) in Kontakt mit dem Aufladeelement (3) angeordnet ist, wobei die zweite Elektrodenschicht (7) eine zweite Metallelektrode (5) und eine p-Typ-Metalloxidhalbleiterschicht (4), die zwischen der zweiten Metallelektrode (5) und dem Aufladeelement (3) angeordnet ist, umfasst, wobei die p-Typ-Metalloxidhalbleiterschicht (4) in Kontakt mit dem Aufladeelement (3) angeordnet ist, wobei das Aufladeelement (3) eine sphärische Form aufweist, und wobei die erste Elektrodenschicht (6) und die zweite Elektrodenschicht (7) auf einer Oberfläche des Aufladeelements (3) ausgebildet sind, wobei eine Oberfläche der mindestens einen der ersten und der zweiten Elektrodenschichten, die in Kontakt mit dem Aufladeelement stehen, eine gekrümmte Oberfläche aufweist.

2. Batterie, umfassend:
eine erste Batteriezelle; und
eine zweite Batteriezelle, die mit der ersten Batteriezelle parallel oder in Serie verbunden ist, wobei die erste Batteriezelle eine Batterie gemäß Anspruch 1 und die zweite Batteriezelle umfasst:
eine erste Elektrodenschicht;
eine zweite Elektrodenschicht; und
ein Aufladeelement, an das eine Ladespannung zwischen den ersten und zweiten Elektrodenschichten angelegt wird, wobei das Aufladeelement ausgebildet ist, um ein Energieniveau in einer Bandlücke auszubilden, indem eine strukturelle Änderung eines n-Typ-Metalloxidhalbleiters, der mit einem isolierenden Stoff beschichtet ist, durch Fotoanregung zu bewirken und dadurch ein Elektron einzufangen.

3. Batterie nach Anspruch 2, wobei die erste Batteriezelle einer Batterie gemäß Anspruch 1 und die zweite Batteriezelle einer Batteriezelle mit parallelen Platten entspricht.

## Revendications

1. Batterie (50) comprenant :
une première couche d'électrode (6) ;
une seconde couche d'électrode (7) ; et
un élément de charge (3) comportant des particules d'un métal-oxyde-semiconducteur de type n couvert d'un matériau isolant et disposé entre les première et seconde couches d'électrode (6, 7), dans laquelle, lorsqu'une tension de charge est appliquée entre les première et seconde couches d'électrode (6, 7) à l'élément de charge (3), l'élément de charge (3) est configuré pour former un niveau d'énergie dans une bande interdite en provoquant un changement structurel photoexcité du métal-oxyde-semiconducteur de type n couvert du matériau isolant et ainsi pour capturer un électron,
**caractérisée en ce que**
la première couche d'électrode (6) comporte une première électrode en métal (1) et une couche de métal-oxyde-semiconducteur de type n (2) disposée entre la première électrode en métal (1) et l'élément de charge (3), dans laquelle la couche de métal-oxyde-semiconducteur de type n (2) est positionnée en contact avec l'élément de charge (3),
la seconde couche d'électrode (7) comporte une seconde électrode en métal (5) et une couche de métal-oxyde-semiconducteur de type p (4) disposée entre la seconde électrode en métal (5) et l'élément de charge (3), dans laquelle la couche de métal-oxyde-semiconducteur de type p (4) est positionnée en contact avec l'élément de charge (3),
l'élément de charge (3) a une forme sphérique, et
la première couche d'électrode (6) et la seconde couche d'électrode (7) sont formées sur une surface de l'élément de charge (3),
dans laquelle une surface d'au moins l'une des première et seconde couches d'électrode qui est en contact avec l'élément de charge est une surface incurvée.

2. Batterie comprenant :
une première batterie unitaire ; et
une seconde batterie unitaire connectée à la première batterie unitaire en parallèle ou en série,
dans laquelle
la première batterie unitaire est une batterie selon la revendication 1, et
la seconde batterie unitaire comprend :
une première couche d'électrode ;
une seconde couche d'électrode ; et
un élément de charge auquel est appliquée une tension de charge entre les première et seconde couches d'électrode, l'élément de charge étant configuré pour former un niveau d'énergie dans une bande interdite en provoquant un changement structurel photoexcité d'un métal-oxyde-semiconducteur de type n couvert d'une substance isolante et ainsi pour capturer un électron.

3. Batterie selon la revendication 2, dans laquelle
la première batterie unitaire est une batterie selon la revendication 1, et
la seconde batterie unitaire est une batterie unitaire de type plaque parallèle.
